# EUROPEAN PATENT APPLICATION

(11) **EP 1 103 627 A2**
(43) Date of publication of application: **30.05.2001**
(21) Application number: 00310229.0
(22) Date of filing: 17.11.2000
(51) Int. Cl.: C23C 4/02, C23C 4/12, C23C 4/18

(54) **Method for thermal barrier coating**

(30) Priority: 24.11.1999 US 448595
(71) Applicant: GENERAL ELECTRIC COMPANY, Schenectady, NY 12345 (US)
(72) Inventor: Farmer, Gilbert, Cincinnati, Ohio 45239 (US); Scheidt, Wilbur Douglas, Cincinnati, Ohio 45233 (US); Fehrenbach, Jeffrey Arnold, Cincinnati, Ohio 45255 (US); Tomlinson, Thomas John, West Chester, Ohio 45069 (US); Heidorn, Raymond William, Fairfield, Ohio 45014 (US); Crow, John Maynard, Morrow, Ohio 45152 (US)
(74) Representative: Pedder, James Cuthbert

(57) **Abstract**

A method of applying thermal barrier coating systems to a metal piece (10) having a cooling hole extending along a central axis (52) through the piece from a first surface (22) of the piece (10) to a second surface (42) of the piece (10) opposite the first surface (22). The method includes spraying a bond coat (60) on the first surface (22) of the piece (10) and spraying a thermal barrier coating (70) on the bond coat (60). Further, the method includes spraying a high pressure fluid jet from a nozzle (46) toward the hole and in a direction generally parallel to the central axis (52) of the hole. The fluid jet is substantially free of solid particulate thereby permitting the jet to remove the bond coat (60) and the thermal barrier coating (70) from the hole without removing metal from the piece (10).

## Description

The present invention relates generally to a method of applying thermal barrier coatings to a metal piece, and more particularly to a method of coating a piece having cooling holes.

Various methods are used to protect metal pieces exposed to high temperature environments. For instance, cooling air is sometimes blown over the piece. In some applications such as aircraft engine combustion chamber liners, cooling holes are formed in the liner for directing film cooling air through the liner and over surfaces of the liner exposed to high temperatures. The film cooling air cools the liner and forms a fluid barrier between the liner and hot gases which flow through the engine. The film of cooling air prevents the gases from directly contacting the liner. In addition, thermal barrier coatings are applied to surfaces of metal pieces exposed to high temperature environments to reduce the amount of heat which is transferred to the metal substrate. However, if the thermal barrier coatings are damaged (e.g., by field exposure or handling damage) the protection offered by the coatings may be compromised.

Although damaged thermal barrier coating can be repaired by conventional methods of stripping the damaged coating and applying a new coating to the piece, cooling holes must be masked before applying the new coating or drilled (e.g., by laser drilling) after applying the new coating to ensure the holes are not blocked by the coating. These masking or drilling operations increase the cost of repairing damaged thermal barrier coatings.

According to a first aspect of the invention, there is provided a method of applying thermal barrier coating systems to a metal piece having a cooling hole extending along a central axis through the piece from a first surface of the piece to a second surface of the piece opposite the first surface, said method comprising the steps of: spraying a bond coat on said first surface of the piece at an angle with respect to the central axis of the hole and to a thickness selected in combination with the angle at which the bond coat is sprayed to prevent the bond coat from entirely filling the hole; spraying a thermal barrier coating on the bond coat at an angle with respect to the central axis of the hole and to a thickness selected in combination with the angle at which the thermal barrier coating is sprayed to prevent the thermal barrier coating from entirely filling the hole; and spraying a high pressure fluid jet from a nozzle toward the hole and in a direction generally parallel to the central axis of the hole, said fluid jet being substantially free of solid particulate thereby permitting the jet to remove the bond coat and the thermal barrier coating from the hole without removing metal from the piece.

The step of spraying the high pressure fluid jet from the nozzle may be performed at least twice, once after the step of spraying the bond coat but before the step of spraying the thermal barrier coating to remove the bond coat from the hole, and again after the step of spraying the thermal barrier coating to remove the thermal barrier coating from the hole.

The thermal barrier coating may be sprayed on said first surface at an angle of incidence with respect to said first surface of at least 45 degrees.

The thermal barrier coating may be sprayed on said first surface in at least two coats and the step of spraying the fluid from the nozzle is performed at least twice, once after spraying a first coat of said coats of thermal barrier coating and again after spraying a second coat of said coats of thermal barrier coating.

The fluid jet may be sprayed from the nozzle toward the second surface of the piece.

The fluid jet may be sprayed from the nozzle at a pressure of between about 5000 pounds per square inch and about 50,000 pounds per square inch. he fluid jet may be sprayed from the nozzle at a pressure of about 20,000 pounds per square inch.

The bond coat may be sprayed on said first surface of the piece to a thickness of between about 0.004 inches and about 0.010 inches.

The bond coat may be sprayed on said first surface of the piece to a thickness of between about 0.004 inches and about 0.006 inches.

The thermal barrier coating may be sprayed on said first surface of the piece in at least one coat having a thickness of between about 0.003 inches and about 0.015 inches.

The thermal barrier coating may be sprayed on said first surface of the piece in at least one coat having a thickness of about 0.010 inches.

According to a second aspect of the invention, there is provided a method of applying thermal barrier coating systems to a metal piece having a series of cooling holes, each of said holes extending along a central axis through the piece from a first surface of the piece to a second surface of the piece opposite the first surface, said method comprising the steps of: spraying a bond coat on said first surface of the piece at an oblique angle with respect to the central axis of the hole and to a thickness selected in combination with the angle at which the bond coat is sprayed to prevent the bond coat from entirely filling each of said series of holes; spraying a thermal barrier coating on the bond coat at an oblique angle with respect to the central axis of the hole and to a thickness selected in combination with the angle at which the thermal barrier coating is sprayed to prevent the thermal barrier coating from entirely filling each of said series of holes; and spraying a high pressure water jet toward each of said holes from a nozzle facing the second surface of the piece and in a direction generally parallel to the central axis of the respective hole, said water jet being substantially free of solid particulate thereby permitting the jet to remove the bond coat and the thermal barrier coating from the respective hole without removing metal from the piece.

The piece may be circular, said series of holes may be aligned in a tangential row, and said piece may be rotated to move the piece with respect to the nozzle and to align the nozzle with each hole of said series of holes as the high pressure water jet is sprayed.

The piece may be moved relative to the nozzle at a rate of between about five inches per minute and about fifty inches per minute.

The piece may be moved relative to the nozzle at a rate of about twenty inches per minute.

According to a third aspect of the invention, there is provided a method of applying coating material to a work piece, the work piece made of a base material, and the work piece having a series of cooling holes, each of said holes extending through the piece from a first surface of the piece to a second surface of the piece opposite the first surface, said method comprising the steps of: spraying a first coat on said first surface of the piece at an oblique angle with respect to an axis of the hole and to a thickness selected in combination with the angle at which the first coat is sprayed to prevent the first coat from entirely filling each of said series of holes; spraying a second coat over the first coat at an oblique angle with respect to an axis of the hole and to a thickness selected in combination with the angle at which the second coat is sprayed to prevent the second coat from entirely filling each of said series of holes; and spraying a fluid jet toward each of said holes from the second surface of the piece, said fluid jet being substantially free of solid particulate thereby permitting the jet to remove coat material from the respective hole without removing base material from the piece.

Thus, briefly, the present invention includes a method of applying thermal barrier coating systems to a metal piece having a cooling hole extending along a central axis through the piece from a first surface of the piece to a second surface of the piece opposite the first surface. The method includes spraying a bond coat on the first surface of the piece and spraying a thermal barrier coating on the bond coat. Further, the method includes spraying a high pressure fluid jet from a nozzle toward the hole and in a direction generally parallel to the central axis of the hole. The fluid jet is substantially free of solid particulate thereby permitting the jet to remove the bond coat and the thermal barrier coating from the hole without removing metal from the piece.

The invention will now be described in greater detail, by way of example, with reference to the drawings, in which:-
Fig. 1 is a elevation of a thermal barrier coating spray apparatus used in the method of the present invention;
Fig. 2 is a elevation of a water jet apparatus used in the method of the present invention;
Fig. 3 is a cross section of a piece having a bond coat applied by the thermal barrier coating spray apparatus;
Fig. 4 is a cross section of the piece after the bond coat is removed from a cooling hole by the water jet apparatus;
Fig. 5 is a cross section of the piece having a thermal barrier coating applied by the thermal barrier coating spray apparatus; and
Fig. 6 is a cross section of a coated piece after the thermal barrier coating is removed from the cooling hole by the water jet apparatus.

Corresponding reference characters indicate corresponding parts throughout the several views of the drawings.

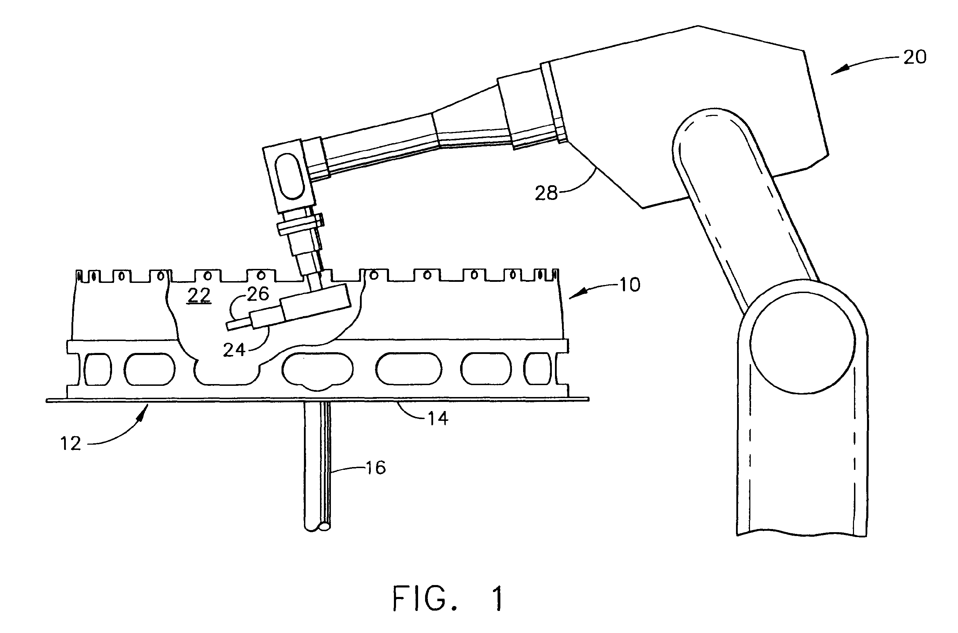

Referring now to the drawings and in particular to Fig. 1, a metal piece such as an outer combustion chamber liner of an aircraft engine is designated in its entirety by the reference number 10. The metal piece 10 may be a new piece which has never had a thermal barrier coating system or it may be a partially repaired piece from which damaged thermal barrier coating has been removed by conventional mechanical and/or chemical stripping processes. The metal piece 10 is received by a conventional turntable, generally designated by 12, having a support 14 sized and shaped for receiving the piece and a central vertical shaft 16 for rotating the support. A conventional thermal barrier coating spray apparatus, generally designated by 20, is provided adjacent the turntable 12 for applying a thermal barrier system (i.e., bond coats and thermal barrier coatings) to a first surface 22 of the metal piece 10. The apparatus 20 includes a spray head 24 having a nozzle 26 through which the thermal barrier system is sprayed and a robotic arm 28 for manipulating the head into position relative to the metal piece 10. Although other apparatus may be used without departing from the scope of the present invention, the thermal barrier coating spray apparatus 20 of the preferred embodiment is an ATCS plasma system with an 8-axis computer numerically controlled Fanuc robot system available from Sulzer Metco of Westbury, New York.

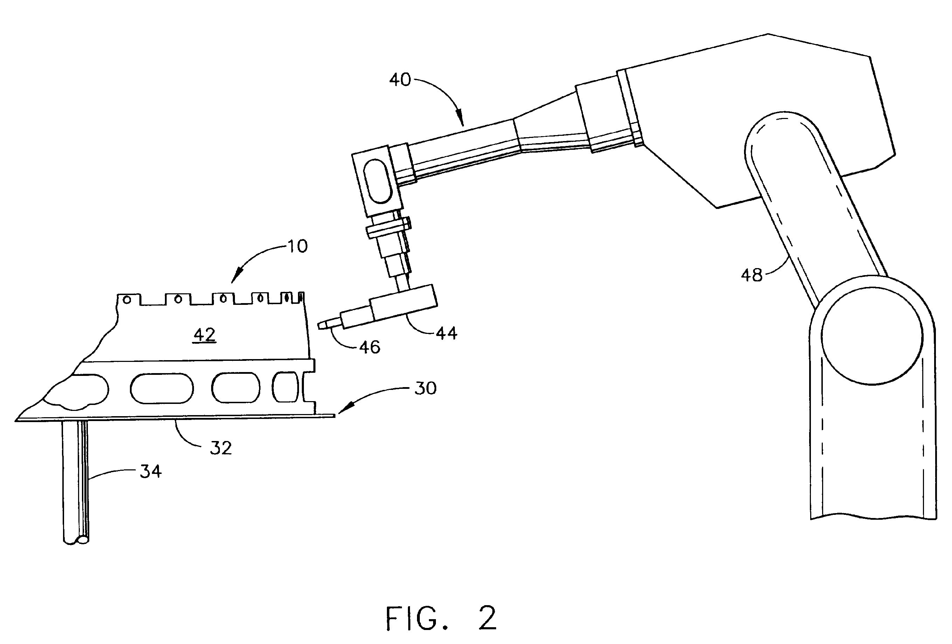

Fig. 2 illustrates the metal piece 10 received by another conventional turntable, generally designated by 30, comprising a support 32 and a central vertical shaft 34 for rotating the support. A conventional water jet apparatus, generally designated by 40, adjacent the turntable 30 sprays water toward the metal piece 10 onto a second surface 42 of the piece opposite the first surface 22 (Fig. 1). The water jet apparatus 40 includes a spray head 44 having a nozzle 46 for spraying a high pressure jet of fluid such as water toward the piece and a robotic arm 46 for manipulating the head into position relative to the metal piece 10.

Although other apparatus may be used without departing from the scope of the present invention, the water jet apparatus 40 of the preferred embodiment is a Model No. 1015 5-axis computer numerically controlled water jet system available from Progressive Technologies of Grand Rapids, Michigan. As the previously described thermal barrier coating spray apparatus and water jet apparatus are conventional and well understood by those skilled in the art, they will not be described in further detail.

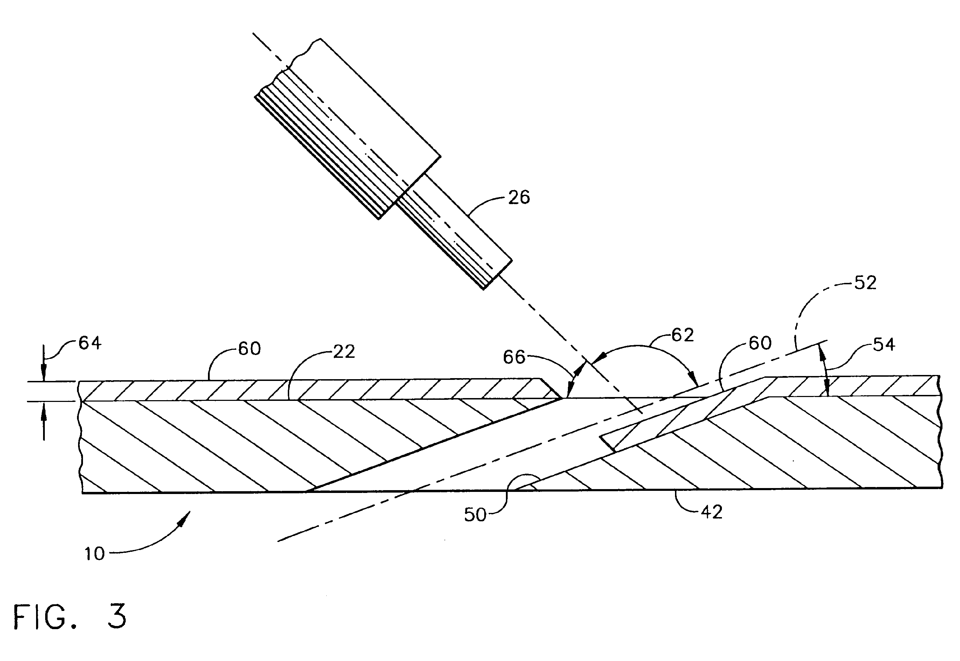

As illustrated in Fig. 3, the metal piece 10 has a series of cooling holes (only one of which is shown) defined by tubular surfaces 50 aligned in a row extending tangentially around the piece. Each cooling hole 50 extends along a central axis 52 through the piece from the first surface 22 of the piece to the second surface 42 of the piece opposite the first surface. The central axis 52 of the hole is oriented at an angle 54 (e.g., twenty degrees) with respect to the first surface 22 of the piece 10. The size and orientation of the hole are not critical to the present invention.

As further illustrated in Fig. 3, the thermal barrier coating spray apparatus 20 is operable to spray a bond coat 60 such as NiCrAIY on the first surface 22 of the piece 10 at a spray angle 62 measured with respect to the central axis 52 of the hole and to a thickness 64 selected in combination with the angle 62 to prevent the bond coat from entirely filling the hole. Although the spray angle 62 may vary without departing from the scope of the present invention, the angle 62 is preferably greater than ninety degrees (i.e., oblique) to minimize the amount of bond coat sprayed on the surface 50 defining the hole opposite the spray nozzle 26. Further, the bond coat 60 is preferably sprayed on the first surface 22 at an angle of incidence 66 measured with respect to the first surface of at least about 45 degrees. Angles of incidence 66 less than about 45 degrees tend to cause the coat 60 to have unmelted areas, voids and lower tensile strength.

As previously mentioned, the spray angle 62 and the thickness 64 are selected in combination to prevent the bond coat from entirely filling the hole. For example, for a piece 10 having nominal 0.020 to 0.030 inch diameter holes extending at an angle 54 of approximately twenty degrees, the bond coat 60 may be sprayed on the first surface 22 at an angle of incidence 66 of about 45 degrees and an angle 62 with respect to the central axis 52 of the hole of about 115 degrees. Further, the bond coat 60 is sprayed to a thickness 64 of between about 0.004 inches and about 0.010 inches, and more preferably to a thickness of between about 0.004 inches and about 0.006 inches. As will be appreciated by those skilled in the art, the angles and thickness may be varied without departing from the scope of the present invention. However, it is desirable that the angle 62 measured with respect to the central axis 52 and the thickness 66 be selected so that the bond coat does not entirely fill the hole. The unfilled portion of the hole provides a pilot hole so that the water jet apparatus can remove the bond coat 60 from the hole as will be explained below.

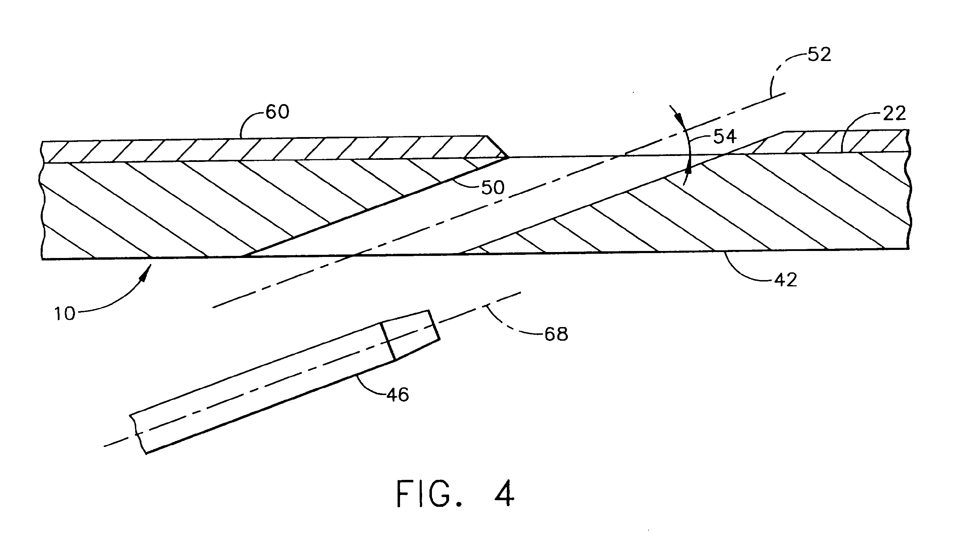

After the bond coat 60 is applied, the piece 10 is placed on the turntable support 30 adjacent the water jet apparatus 40. As shown in Fig. 4, the water jet apparatus 40 sprays a high pressure water jet toward the hole from a nozzle 46 facing the second surface 42 of the piece 10 and in a direction 68 generally parallel to the central axis 52 of the hole. The water jet is substantially free of solid particulate so the jet removes only the bond coat 60 from the hole 52 without removing metal from the piece 10. As previously mentioned, a pilot hole is needed to permit the water jet to remove the bond coat 60 from the hole. This is because the water jet abrades the bond coat 60 rather than pushing it from the hole. If the pilot hole is not present, the abrasion capability of the water jet is reduced. Although the water jet may be sprayed at other pressures without departing from the scope of the present invention, the water jet apparatus of the preferred embodiment produces a water jet having a pressure of between about 5000 pounds per square inch and about 50,000 pounds per square inch.

Preferably, the water jet is sprayed from the nozzle 46 at a pressure of about 20,000 pounds per square inch.

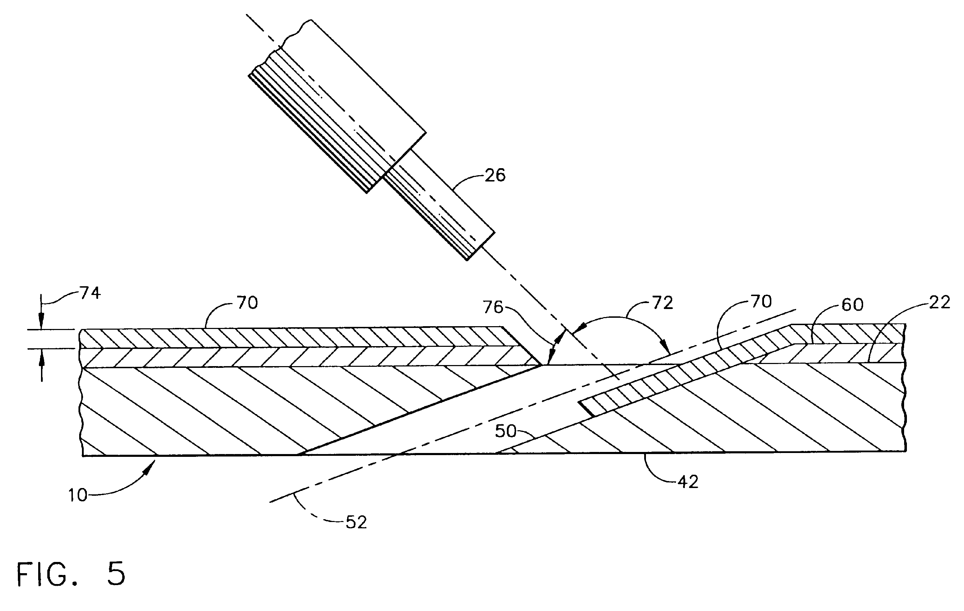

After the bond coat 60 is removed from the hole, the piece 10 is returned to the first turntable 12. As illustrated in Fig. 5, the thermal barrier coating spray apparatus 20 sprays a thermal barrier coating 70 such as yttria stabilized zirconia on the bond coat 60 at a spray angle 72 measured with respect to the central axis 52 of the hole and to a thickness 74 selected in combination with the angle at which the thermal barrier coating is sprayed to prevent the thermal barrier coating from entirely filling the hole. Further, the thermal barrier coating 70 is preferably sprayed on the bond coat 60 at an angle of incidence 76 with respect to the bond coat surface of at least about 45 degrees. Angles of incidence 76 less than about 45 degrees tend to cause the coating 70 to have unmelted areas, voids and lower tensile strength.

As with the bond coat parameters, the spray angle 72 and the thickness 74 are selected in combination to prevent the thermal barrier coating from entirely filling the hole. For example, for the previously described piece 10 having nominal 0.020 to 0.030 inch diameter holes extending through the piece at an angle 54 of approximately twenty degrees, the thermal barrier coating 70 may be sprayed on the bond coat 60 at an angle of incidence 76 of about 45 degrees and a spray angle 72 of about 115 degrees. Further, the coating 70 is sprayed in at least one coat having a thickness 74 of between about 0.003 inches and about 0.015 inches. Preferably, the coating 70 is sprayed in a coat having a thickness 74 of about 0.010 inches. As will be appreciated by those skilled in the art, the angles and thickness may be varied without departing from the scope of the present invention. However, it is desirable that the spray angle 72 and the thickness 74 be selected so that the coating 70 does not entirely fill the hole. As with the bond coat, leaving a pilot hole in the thermal barrier coating enables the water jet to remove the coating 70 from the hole.

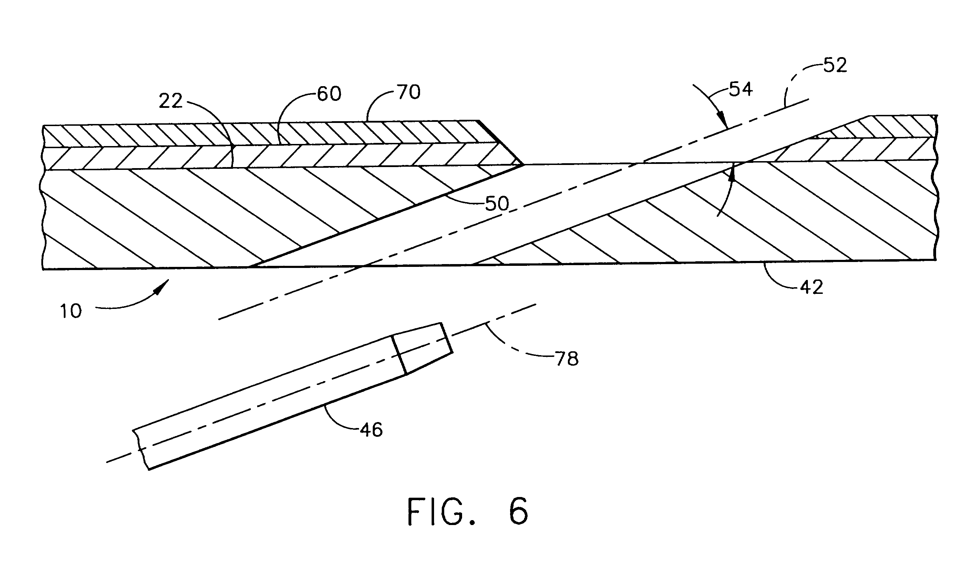

After the thermal barrier coating 70 is applied, the piece 10 is placed on the turntable support 30 adjacent the water jet apparatus 40 (Fig. 6). The water jet apparatus 40 sprays a high pressure water jet toward the hole from the nozzle 46 facing the second surface 42 of the piece 10 and in a direction 78 generally parallel to the central axis 52 of the hole to remove thermal barrier coating from the hole. Because the water jet is substantially free of solid particulate, the jet only removes the thermal barrier coating 70 from the hole without removing metal from the piece 10. Although the water jet pressure may vary without departing from the scope of the present invention, in the preferred embodiment the water jet pressure used during this spraying step is identical to the pressure used during the prior spraying step.

After the thermal barrier coating 70 is removed from the hole, additional layers of thermal barrier coating (not shown) may be applied to the piece 10 to build the total coating thickness. Preferably, the coating 70 is removed from the hole after applying each layer. As will be appreciated by those skilled in the art, the step of spraying the piece with the water jet after the bond coat 60 is applied and before the thermal barrier coating 70 is applied may be omitted if the combined thickness of the layers is thin enough that they do not entirely fill the hole thereby allowing the layers to be removed together.

Because the water jet does not damage the base metal of the piece 10, its flow need not be interrupted as the jet travels from hole to hole. Further, where the piece 10 has a series of holes , either the piece or the water jet nozzle 46 (or both) may be moved with respect to the other to sequentially align the water jet with each of the holes in the series. For example, where the piece 10 is circular and the series of holes is oriented in a row extending tangentially around the piece, the piece may be rotated to move the piece with respect to the nozzle 46 and to align the nozzle with each hole of the series. A motor (not shown) connected the shaft 34 may be used to continuously rotate the turntable 30 and piece 10. Although the piece 10 and the nozzle 46 may be moved at other rates without departing from the scope of the present invention, in the preferred embodiment they are moved at a relative speed of between about five inches per minute and about fifty inches per minute. In a particularly preferred embodiment, the piece 10 is moved relative to the nozzle 46 at a rate of about twenty inches per minute. Although the turntable 30 of the preferred embodiment rotates continuously, it is envisioned that the turntable may be rotated intermittently so the water jet dwells when aligned with each hole.

When introducing elements of the present invention or the preferred embodiment(s) thereof, the articles "a", "an", "the" and "said" are intended to mean that there are one or more of the elements. The terms "comprising", "including" and "having" are intended to be inclusive and mean that there may be additional elements other than the listed elements.

## Claims

1. A method of applying thermal barrier coating systems s to a metal piece (10) having a cooling hole extending along a central axis (52) through the piece (10) from a first surface (22) of the piece (10) to a second surface (42) of the piece (10) opposite the first surface (22), said method comprising the steps of:
spraying a bond coat (60) on said first surface (22) of the piece (10) at an angle (62) with respect to the central axis (52) of the hole and to a thickness (64) selected in combination with the angle (62) at which the bond coat (60) is sprayed to prevent the bond coat (60) from entirely filling the hole;
spraying a thermal barrier coating (70) on the bond coat (60) at an angle (72) with respect to the central axis (52) of the hole and to a thickness (74) selected in combination with the angle (72) at which the thermal barrier coating (70) is sprayed to prevent the thermal barrier coating (70) from entirely filling the hole; and
spraying a high pressure fluid jet from a nozzle (46) toward the hole and in a direction generally parallel to the central axis (52) of the hole, said fluid jet being substantially free of solid particulate thereby permitting the jet to remove the bond coat (60) and the thermal barrier coating (70) from the hole without removing metal from the piece (10).

2. A method as set forth in claim 1 wherein the step of spraying the high pressure fluid jet from the nozzle (46) is performed at least twice, once after the step of spraying the bond coat (60) but before the step of spraying the thermal barrier coating (70) to remove the bond coat (60) from the hole, and again after the step of spraying the thermal barrier coating (70) to remove the thermal barrier coating (70) from the hole.

3. A method as set forth in claim 1 or 2 wherein the thermal barrier coating (70) is sprayed on said first surface (22) in at least two coats and the step of spraying the fluid from the nozzle (46) is performed at least twice, once after spraying a first coat of said coats of thermal barrier coating (70) and again after spraying a second coat of said coats of thermal barrier coating (70).

4. A method as set forth in claim 1, 2 or 3 wherein the fluid jet is sprayed from the nozzle (46) toward the second surface (42) of the piece (10).

5. A method of applying thermal barrier coating systems to a metal piece (10) having a series of cooling holes, each of said holes extending along a central axis (52) through the piece (10) from a first surface (22) of the piece (10) to a second surface (42) of the piece (10) opposite the first surface (22), said method comprising the steps of:
spraying a bond coat (60) on said first surface (22) of the piece (10) at an oblique angle (62) with respect to the central axis (52) of the hole and to a thickness (64) selected in combination with the angle (62) at which the bond coat (60) is sprayed to prevent the bond coat (60) from entirely filling each of said series of holes;
spraying a thermal barrier coating (70) on the bond coat (60) at an oblique angle (72) with respect to the central axis (52) of the hole and to a thickness (74) selected in combination with the angle (72) at which the thermal barrier coating (70) is sprayed to prevent the thermal barrier coating (70) from entirely filling each of said series of holes; and
spraying a high pressure water jet toward each of said holes from a nozzle (46) facing the second surface (42) of the piece (10) and in a direction generally parallel to the central axis (52) of the respective hole, said water jet being substantially free of solid particulate thereby permitting the jet to remove the bond coat (60) and the thermal barrier coating (70) from the respective hole without removing metal from the piece (10).

6. A method as set forth in claim 5 wherein the piece (10) is circular, said series of holes are aligned in a tangential row, and said piece (10) is rotated to move the piece (10) with respect to the nozzle (46) and to align the nozzle (46) with each hole of said series of holes as the high pressure water jet is sprayed.
